# FASCICULE DE BREVET EUROPEEN

(11) **EP 1 868 355 B1**
(45) Date de publication et mention de la délivrance du brevet: **18.01.2012**
(21) Numéro de dépôt: 07109955.0
(22) Date de dépôt: 11.06.2007
(51) Int. Cl.: H04L 29/12, H04L 29/08, H04L 12/24, H04L 12/28

(54) **Dispositif et procédé pour associer un terminal à un compte utilisateur**
Vorrichtung und Verfahren zum Verbinden eines Endgeräts mit einem Benutzerkonto
Device and method for associating a terminal to a user account

(30) Priorité: 13.06.2006 FR 0652102
(43) Date de publication de la demande: 19.12.2007
(73) Titulaire: FRANCE TELECOM, 75015 Paris (FR)
(72) Inventeur: Sicart, Julien, 75015, PARIS (FR); Prouvost, Denis, 75015, PARIS (FR)
(74) Mandataire: Delumeau, François Guy

(56) Documents cités:
- US-A1- 2005 021 766
- US-A1- 2005 239 445

## Description

### Arrière-plan de l'invention

Le domaine de l'invention est celui des réseaux de télécommunications, plus particulièrement mais de façon non limitative, à usage domestique.

Plus précisément, on considère un utilisateur souhaitant accéder, depuis un terminal, à une plateforme de service disponible sur le réseau.

Le domaine de l'invention se limite aux applications dans lesquelles le terminal est connecté au réseau de télécommunications via une passerelle.

Au sens de ce document, une passerelle est un dispositif apte à interconnecter un réseau local et un réseau d'opérateur, par exemple du type IP (Internet Protocol) via un réseau d'accès à support filaire ou radio.

Une telle passerelle est en particulier apte à effectuer une translation d'adresse entre sa propre adresse et celle des terminaux du réseau local dans les trames échangées entre les deux réseaux.

On parle aussi de "substitution d'adresses".

Dans de nombreuses applications, il est intéressant d'associer un identifiant de ce terminal à un compte de l'utilisateur sur la plateforme de service.

Une telle association permet par exemple de personnaliser l'interface homme/machine du terminal en fonction de choix propres à l'utilisateur.

Une telle association permet également de favoriser les applications de commerce électronique dans lequel le terminal est utilisé pour sélectionner des objets ou accéder à des services, le montant de ces objets ou services étant facturé à l'utilisateur dont le compte est associé à ce terminal.

Dans l'état actuel de la technique, lorsqu'un utilisateur souhaite associer un terminal avec son compte sur une plateforme de service, il doit se connecter, via une interface web, sur la plateforme de service et saisir manuellement un identifiant unique de son terminal, par exemple un numéro de série.

Cette manipulation est complexe et présente des risques de mauvaise saisie.

Une autre solution mise en oeuvre dans l'état actuel de la technique pour associer un terminal avec un compte de l'utilisateur sur une plateforme de service consiste à enregistrer l'identifiant du terminal et l'identifiant du compte utilisateur au moment de la commande ou de la livraison de ce terminal. Cette opération peut par exemple être réalisée par l'opérateur de télécommunications.

Cette solution est complexe à gérer pour l'opérateur et ne peut pas être mise en oeuvre lorsque le terminal est commercialisé par un tiers, par exemple directement par son constructeur. Le document US 2005/021766 décrit un procédé pour fournir un service à un utilisateur dans lequel l'identifiant du terminal de cet utilisateur est obtenu auprès d'un terminal DHCP. Le document US 2005/0239445 décrit une passerelle apte à obtenir l'identifiant d'un terminal d'accès. Mais cette passerelle ne peut associer cet identifiant avec un compte d'un utilisateur de ce terminal.

### Objet et résumé de l'invention

La présente invention propose une méthode pour associer, sans saisie de l'utilisateur, un terminal avec un compte utilisateur sur une plateforme de service.

L'invention concerne un procédé pour associer l'identifiant unique d'un premier terminal connecté à un réseau de télécommunications via une passerelle, à l'identifiant unique d'un compte d'un utilisateur de ce terminal, l'adresse de la passerelle dans le réseau étant appelée « première adresse de passerelle ».

Ce procédé comporte :
- une étape de réception d'une requête d'accès, émise par un deuxième terminal pour se connecter au compte utilisateur, l'adresse source comprise dans la requête d'accès étant susceptible d'être substituée par la passerelle ;
- une étape d'obtention de l'adresse source et de l'identifiant de compte précités, à partir de la requête d'accès ;
- une étape de réception d'une requête d'association émise par le premier terminal ;
- une étape d'obtention de la première adresse de passerelle et de l'identifiant du premier terminal à partir de la requête d'association ;
- une étape d'obtention, d'une deuxième adresse de passerelle à partir de l'adresse source ;
- une étape de comparaison des première et deuxième adresses de passerelle, et si ces adresses sont égales :
- une étape d'association de l'identifiant unique du premier terminal avec l'identifiant unique de compte dans une base de données.

Corrélativement, l'invention concerne un dispositif pour associer l'identifiant unique d'un premier terminal connecté à un réseau de télécommunications via une passerelle, à l'identifiant unique d'un compte d'un utilisateur de ce terminal, l'adresse de la passerelle dans le réseau étant appelée "première adresse de passerelle".

Ce dispositif comporte :
- des moyens de réception d'une requête d'accès, émise par un deuxième terminal pour se connecter au compte utilisateur, l'adresse source comprise dans la requête d'accès étant susceptible d'être substituée par la passerelle ;
- des moyens d'obtention de l'adresse source et de l'identifiant de compte précités, à partir de la requête d'accès ;
- des moyens de réception d'une requête d'association émise par le premier terminal ;
- des moyens d'obtention de la première adresse de passerelle et de l'identifiant du premier terminal à partir de la requête d'association ;
- des moyens d'obtention d'une deuxième adresse de passerelle à partir de l'adresse source ;
- des moyens de comparaison des première et deuxième adresses de passerelle ; et
- des moyens pour associer, si ces adresses sont égales, l'identifiant unique du premier terminal avec l'identifiant unique de compte dans une base de données.

Dans cette invention on considère que l'utilisateur est connecté, sur la plateforme de service, à son compte utilisateur au moyen d'un deuxième terminal.

Conformément à invention , la plateforme de service est adaptée à obtenir l'adresse d'une passerelle résidentielle associée à ce compte utilisateur, une telle association étant généralement réalisée par l'opérateur au moment de la connexion de la passerelle au réseau.

Le procédé et le dispositif d'association selon l'invention vérifient que l'adresse de cette passerelle sur le réseau correspond à l'adresse de la passerelle derrière laquelle est connecté le terminal à associer, et effectuent l'association lorsque c'est effectivement le cas.

L'association entre l'identifiant unique du premier terminal et le compte de l'utilisateur est ainsi effectuée sans saisie de cet identifiant.

Dans un cas particulier, le premier et le deuxième terminal sont connectés au réseau via la même passerelle. Dans ce cas, l'adresse de la passerelle est contenue dans la requête d'accès, du fait que, comme de façon connue, la passerelle substitue systématiquement son adresse à celle des terminaux domestiques qui lui sont connectés pour toutes les requêtes émises vers le réseau.

L'invention s'applique également lorsque le deuxième terminal n'est pas connecté au réseau via la passerelle à laquelle est connecté le premier terminal.

Dans ce cas, conformément à l'invention, l'adresse de la passerelle est obtenue dans une base de données qui associe l'identifiant du compte à cette adresse. Cette base de données est généralement gérée par l'opérateur.

Dans un mode particulier de réalisation de l'invention, l'obtention de la deuxième adresse de passerelle est effectuée en deux sous-étapes, à savoir :
- obtention d'un identifiant d'une ligne de télécommunications associée à l'identifiant unique de compte utilisateur ; et
- obtention de la deuxième adresse de passerelle associée à l'identifiant de ligne.

Lorsque la passerelle est reliée au réseau Internet par une ligne ADSL, l'identifiant de ligne précité peut correspondre à l'identifiant de cette ligne ADSL.

Un procéde d'un autre type, pour associer l'identifiant unique d'un terminal connecté à un réseau de télécommunications via une passerelle, à l'identifiant unique d'un compte d'un utilisateur de ce terminal, comporte
- une étape de réception d'une requête d'association émise par le terminal ;
- une étape d'obtention de l'adresse de la passerelle dans le réseau et d'un identifiant du terminal à partir de la requête d'association ;
- une étape d'obtention d'au moins un identifiant de compte utilisateur associé à l'adresse de passerelle dans une base de données ;
- une étape d'envoi de cet ou ces identifiant(s) de compte au terminal ;
- une étape de réception d'une réponse du terminal comportant un seul de ces identifiants de compte ; et
- une étape d'association de cet identifiant de compte avec l'identifiant de

terminal. Corrélativement, d'un autre type un dispositif pour associer l'identifiant unique d'un terminal connecté à un réseau de télécommunications via une passerelle, à l'identifiant unique d'un compte d'un utilisateur de ce terminal, comporte
- des moyens de réception d'une requête d'association émise par le terminal ;
- des moyens d'obtention de l'adresse de la passerelle dans le réseau et d'un identifiant du terminal à partir de la requête d'association ;
- des moyens d'obtention d'au moins un identifiant de compte utilisateur associé à l'adresse de passerelle dans une base de données ;
- des moyens d'envoi de cet ou ces identifiant(s) de compte au terminal ;
- des moyens de réception d'une réponse du terminal comportant un seul des identifiants de compte; et
- des moyens pour associer cet identifiant de compte avec l'identifiant de terminal.

Dans ce cas, il n'est pas pré-requis que l'utilisateur soit connecté à son compte par l'intermédiaire d'un deuxième terminal.

Dans ce cas, la plateforme de service obtient la liste des comptes utilisateurs associés à l'adresse de la passerelle derrière laquelle le terminal à associer est connecté.

Cette liste est ensuite proposée à l'utilisateur via l'interface du premier terminal, par exemple par affichage sur un écran de ce terminal.

L'utilisateur peut alors sélectionner, par exemple au moyen d'un curseur, le compte auquel le terminal doit être associé.

On évite là encore toute erreur de saisie de l'identifiant du terminal.

Dans un mode particulier de ce type de procédé, l'obtention de l'identifiant du compte utilisateur est effectuée en deux sous-étapes, à savoir :
- obtention d'un identifiant d'une ligne de télécommunications associée à l'adresse de la passerelle ; et
- obtention d'au moins un identifiant de compte utilisateur associé à l'identifiant de ligne.

Lorsque la passerelle est reliée au réseau Internet par une ligne ADSL, l'identifiant de ligne précité peut correspondre à l'identifiant de cette ligne ADSL.

Dans un mode particulier de réalisation, les différentes étapes du procédé d'association sont déterminées par des instructions de programmes d'ordinateurs.

En conséquence, l'invention vise aussi un programme d'ordinateur sur un support d'informations, ce programme étant susceptible d'être mis en oeuvre dans un dispositif d'association ou plus généralement dans un ordinateur, ce programme comportant des instructions adaptées à la mise en oeuvre des étapes d'un procédé d'association tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente un dispositif d'association conforme à l'invention dans un premier environnement ;
- la figure 2 représente un dispositif d'association conforme à l'invention dans un deuxième environnement;
- la figure 3 représente, sous forme d'organigramme, les principales étapes d'un procédé d'association confirme à l'invention qui s'applique à ces deux environnements ;
- la figure 4 représente un dispositif d'association dans un troisième environnement ;
- la figure 5 représente, sous forme d'organigramme, les principales étapes d'un procédé d'association qui s'applique à ce troisième environnement ;
- la figure 6 représente des requêtes qui peuvent être utilisées dans l'invention ; et
- la figure 7 représente une base de données d'une plateforme de service après mise en oeuvre de l'invention .

### Description détaillée de l'invention dans un premier environnement

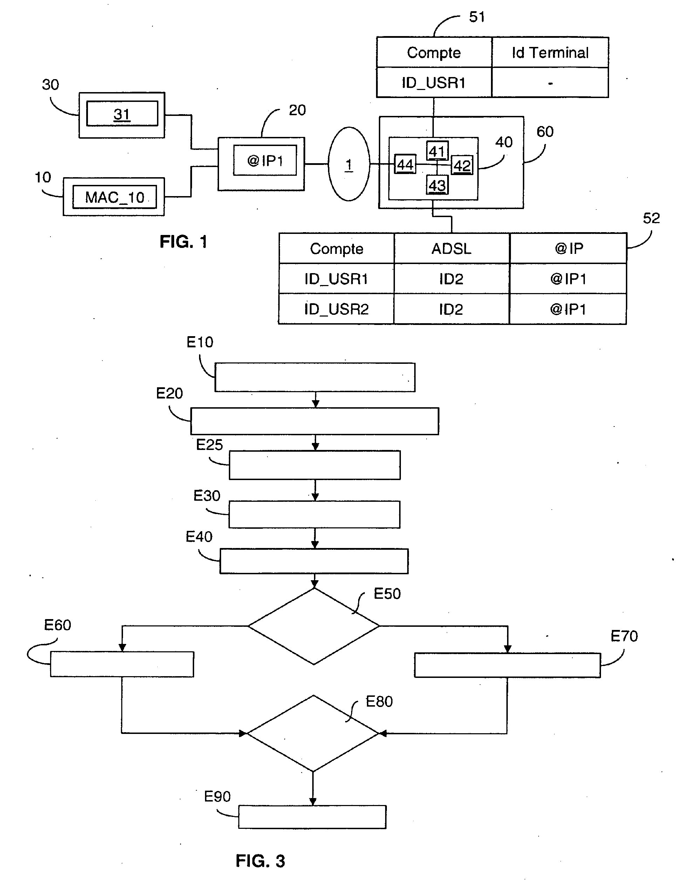

La **figure 1** représente un dispositif d'association 40 conforme à l'invention, implémenté dans une plateforme de service 60.

Ce dispositif 40 a l'architecture matérielle d'un ordinateur conventionnel. Il comporte notamment un processeur 41, une mémoire vive 42 de type RAM et une mémoire morte 43 dans laquelle est enregistré un programme d'ordinateur conforme à l'invention, ce programme comportant des instructions pour exécuter les étapes du procédé dont l'organigramme est donné à la figure 3.

Le dispositif d'association 40 conforme à l'invention est connecté au réseau Internet 1 par des moyens de communication 44 constitués en l'espèce par une carte réseau et des pilotes logiciels associés.

Sur la figure 1, on a représenté deux terminaux référencés 10 et 30 qui sont connectés au réseau Internet 1 via une passerelle 20, qui dans cet exemple est de type résidentielle.

Dans cet exemple, la passerelle 20 est reliée au réseau Internet 1 par une ligne ADSL ayant un identifiant ADSL, référencé ID2.

Dans l'exemple décrit ici, le terminal référencé 30 est un ordinateur personnel. Il comporte un navigateur 31 permettant à un utilisateur de naviguer sur le réseau Internet 1.

On supposera dans cet exemple que l'utilisateur possède un compte sur la plateforme de service 60, l'identifiant unique de ce compte étant référencé ID_USR1.

Cet identifiant unique de compte ID_USR1 peut par exemple être constitué par une adresse mail du type p.duDont@orange.fr.

Le terminal 10 possède un identifiant unique. Il s'agit dans cet exemple de son adresse MAC MAC_10.

Nous supposerons maintenant que l'utilisateur souhaite associer dans une base de données 51 accessible par le dispositif 40 d'association, l'identifiant unique MAC_10 de son terminal 10 avec l'identifiant unique ID_USR1 de son compte sur la plateforme de service 60.

Il apparaît en effet, sur la figure 1, qu'avant la mise en oeuvre de l'invention, la base de données 51 ne comporte aucun identifiant de terminal en vis-à-vis du compte d'identifiant ID_USR1.

Nous allons maintenant décrire, en référence à la **figure 3**, les principales étapes du procédé d'association mis en oeuvre par le dispositif 40.

Au cours d'une étape E10, l'utilisateur de l'ordinateur personnel 30 effectue une opération qui déclenche l'envoi, par l'ordinateur personnel 30, d'une requête R1 visant à accéder au compte utilisateur dont l'identifiant ID-USR1 est mémorisé dans la base de données 51.

Au moment de son émission, l'adresse source @S contenue dans la requête d'accès R1 est l'adresse @IP_30 de l'ordinateur 30.

Cette requête R1 est relayée par la passerelle 20 placée en coupure de flux entre l'ordinateur personnel 30 et le réseau Internet.

De façon connue, la passerelle 20 effectue une substitution d'adresse.

L'adresse source de la requête d'accès R1 après relais par la passerelle 20 est donc l'adresse @IP1 de la passerelle.

Nous supposerons que cette requête d'accès R1 est reçue par le dispositif 40 d'association conforme à l'invention au cours de la même étape E10.

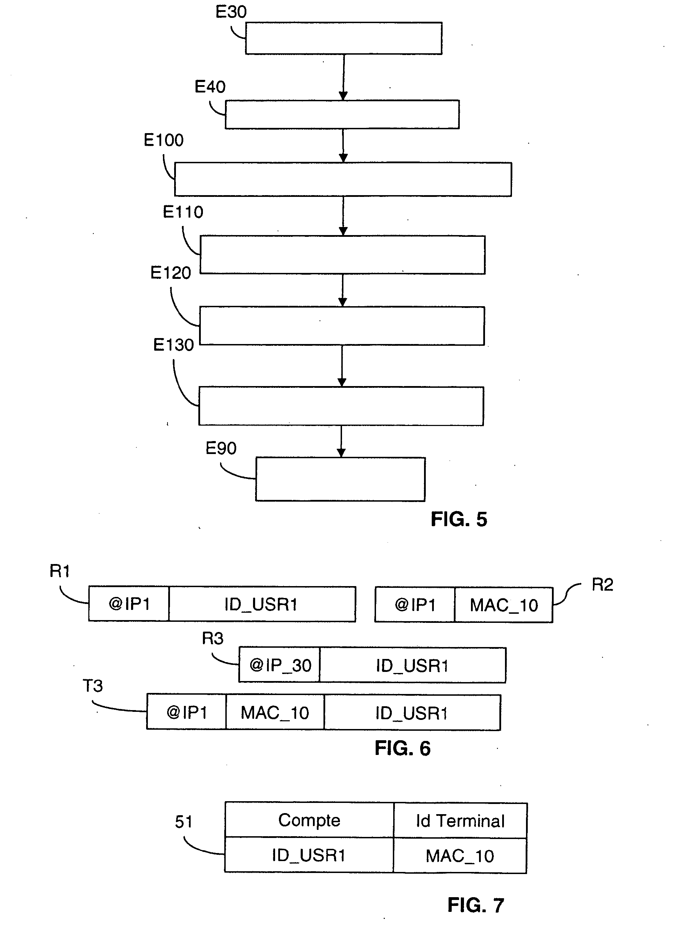

Cette requête d'accès R1 telle que reçue par la passerelle 20 est donnée à la **figure 6**.

Nous supposerons que cette requête d'accès R1 comporte également l'identifiant unique ID_USR1 du compte de l'utilisateur sur la plateforme de service 60.

Au cours d'une étape E20, le dispositif 40 d'association conforme à l'invention obtient, à partir de cette requête d'accès R1:
- l'adresse source @S de la requête d'accès R1 et la mémorise dans une première variable V1 de sa mémoire vive 42 ; et
- l'identifiant de compte ID_USR1.

Puis, au cours d'un test non référencé, le dispositif d'association 40 vérifie si un identifiant de terminal est associé avec le compte d'identifiant ID-USR1 dans la base de données 51.

Comme ce n'est pas le cas, ce test est suivi par une étape E25 au cours de laquelle le dispositif d'association 40 invite l'utilisateur à effectuer une opération sur le terminal 10.

Dans l'exemple décrit ici, cette opération consiste en l'appui sur un bouton spécifique du terminal 10.

Suite à l'appui sur ce bouton, le terminal 10 envoie, au cours d'une étape E30, une requête d'association R2 au dispositif d'association 40.

Cette requête d'association R2 est donnée à la figure 6.

Elle comporte l'identifiant MAC_10 du terminal 10 et l'adresse @IP1 de la passerelle 20, celle-ci étant placée en coupure de flux entre le terminal 10 et le réseau Internet 1.

Nous supposerons que cette requête d'association R2 est reçue par le dispositif d'association 40 au cours de cette même étape E30.

Au cours d'une étape E40, le dispositif d'association 40 obtient, à partir de la requête d'association R2 :
- l'identifiant MAC_10 du terminal 10 à associer; et
- l'adresse @IP1 contenue dans cette requête. Il mémorise cette adresse dans une variable V2 de la mémoire vive 42.

Au cours d'un test E50, le processeur 41 du dispositif d'association 40 compare le contenu des variables V1 (adresse source de R1) et V2 (adresse de la requête d'association R2) et détecte que ces valeurs sont égales.

Le résultat du test E50 est donc positif. Il est suivi par une étape E60 au cours de laquelle le processeur 41 du dispositif d'association 40 affecte à une deuxième adresse de passerelle @IP2 l'adresse source de la requête d'accès R1 obtenue à l'étape E20.

Cette étape d'affectation E60 est suivie par un test E80 au cours duquel le processeur 41 du dispositif d'association 40 compare les première et deuxième adresses de passerelle @IP1 et @IP2 et détecte que ces valeurs sont égales.

Le résultat du test E80 est positif.

Il est suivi par une étape E90 au cours de laquelle le dispositif d'association 40 associe, dans la base de données 51, l'identifiant unique MAC_10 du terminal 10 obtenu dans la requête d'association R2 avec l'identifiant unique de compte ID_USR1 obtenu dans la requête d'accès R1.

La **figure 7** représente l'état de la base de données 51 après cette étape E90 d'association.

### Description détaillée de l'invention dans un deuxième environnement

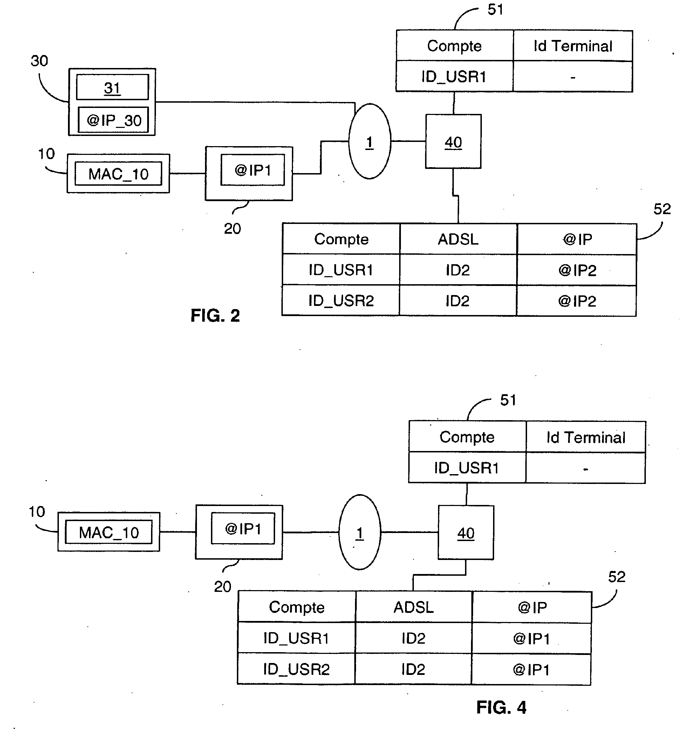

La **figure 2** représente le dispositif d'association 40 de la figure 1 dans un deuxième environnement.

Nous supposerons dans cet exemple que l'ordinateur personnel 30 est connecté directement au réseau Internet 1.

A la **figure 6****,** on a référencé R3 la requête d'accès reçue par le dispositif d'association 40, au cours de l'étape E10, suite à la demande effectuée par l'utilisateur, de l'ordinateur personnel 30 pour accéder au compte d'identifiant ID_USR1.

Dans cet exemple, l'adresse source @S de la requête d'accès R1 est l'adresse @IP_30 de cet ordinateur.

Dans l'exemple décrit ici, la passerelle 20 est reliée au réseau Internet 1 par une ligne ADSL ayant un identifiant ADSL référencé ID2.

Le procédé d'association selon l'invention mis en oeuvre par le dispositif d'association 40 se déroule comme précédemment et le dispositif d'association 40 reçoit, au cours de l'étape E30 déjà décrite, la requête d'association R2 contenant l'adresse @IP1 de la passerelle 20 à laquelle est connecté le terminal 10 à associer, et l'identifiant MAC_10 de ce terminal.

Dans cet exemple, le dispositif d'association 40 détecte, au cours du test E50, que l'adresse de passerelle @IP1 de la requête d'association R2 est différente de l'adresse source de la requête d'accès R1.

En conséquence, le résultat du test E50 est négatif. Ce test est suivi par une étape E70 au cours de laquelle le processeur 41 du dispositif d'association 40 obtient une deuxième adresse de passerelle @IP2 à partir de l'adresse source précitée.

Dans l'exemple décrit ici, cette recherche s'effectue dans une base de données 52 qui comporte :
- les identifiants de compte utilisateur ;
- les identifiants de ligne ADSL ; et
- les adresses de passerelle associées à ces identifiants ADSL.

Dans cet exemple, le dispositif d'association 40 obtient donc dans un premier temps l'identifiant ADSL ID2 associé à l'identifiant de compte ID_USR1 puis, à partir de cet identifiant ADSL, l'adresse @IP2 associée à l'identifiant ADSL ID2.

Au cours d'une étape E70, le dispositif d'association 40 affecte donc l'adresse @IP1 à la deuxième adresse de passerelle @IP2.

Cette étape E70 d'affectation est suivie par le test E80 déjà décrit.

Au cours de ce test E80, le dispositif d'association 40 détecte que les deux adresses de passerelle, à savoir la première adresse @IP1 obtenue dans la requête d'association R2 et la deuxième adresse @IP2 obtenue dans la base de données 52, sont identiques.

Ce test E80 est suivi par l'étape E90 déjà décrite au cours de laquelle le dispositif d'association 40 associe alors l'identifiant unique MAC_10 du terminal 10 avec l'identifiant de compte ID_USR1 dans la base de données 51, comme représenté à la figure 7.

### Description détaillée d'un autre type de dispositif d'association.

La figure 4 représente un dispositif d'association 40 conforme à, cet dans un troisième environnement.

Dans cet exemple, la mémoire morte 43 de ce dispositif 40 mémorise un programme d'ordinateur dont les principales étapes sont données en référence à la **figure 5****.**

Dans cet exemple, l'utilisateur ne possède pas d'ordinateur personnel 30.

On supposera que le dispositif d'association 40 reçoit, au cours d'une étape E30, une requête d'association R2 émise par le terminal 10.

Au cours d'une étape non référencée, le dispositif d'association 40 vérifie, dans la base de données 51, si un identifiant de compte est associé avec l'identifiant unique MAC_10 du terminal 10 reçu dans la requête d'association R2.

Comme ce n'est pas le cas, ce test est suivi par une étape E40 au cours de laquelle le dispositif d'association 40 obtient, dans la requête d'association R2, l'adresse @IP1 de la passerelle derrière laquelle est connecté le terminal 10.

Puis, au cours d'une étape E100, le dispositif d'association 40 recherche, dans la base de données 52, les identifiants de compte associés avec cette adresse @IP1.

Plus précisément, cette opération s'effectue en obtenant, dans un premier temps, l'identifiant de la ligne ADSL ID2 associé à l'adresse @IP1 de la passerelle 20, puis les identifiants de compte associés à cet identifiant ADSL ID2.

Dans l'exemple décrit ici, on détecte deux identifiants uniques de comptes, à savoir les identifiants ID_USR1 et ID_USR2.

Ceci s'explique par le fait que deux utilisateurs différents possèdent des comptes sur la plateforme de service 60 même s'ils y accèdent à travers la même passerelle 20.

Au cours d'une étape E110, le dispositif d'association 40 envoie une liste L comportant ces deux identifiants de compte ID_USR1 et ID_USR2 au terminal 10.

On supposera que ces identifiants de comptes s'affichent sur un écran du terminal 10 et que l'utilisateur sélectionne, au cours d'une étape E120, l'identifiant ID_USR1.

Cet identifiant de compte ID_USR1 est renvoyé par le terminal 10 dans une trame T3 représentée à la figure 6.

Dans l'exemple représenté, la trame T3 comporte l'adresse @IP1 de la passerelle 20, l'identifiant unique MAC_10 du terminal 10 ainsi que l'identifiant de compte ID_USR1.

Dans une alternative, la trame T3 pourrait comporter uniquement l'adresse @IP1 de la passerelle 20 et l'identifiant de compte ID_USR1.

Cette trame T3 est reçue par le dispositif d'association 40 au cours d'une étape E130.

Puis, au cours d'une étape E90, le dispositif d'association 40 associe, dans la base de données 51, l'identifiant unique MAC_10 du terminal 10 et l'identifiant unique de compte ID_USR1 reçus dans la trame T3 à l'étape précédente.

L'état résultant de la base de données 51 est donné à la figure 7.

## Revendications

1. Procédé pour associer l'identifiant unique (MAC_10) d'un premier terminal (10) connecté à un réseau de télécommunications (1) via une passerelle (20), à l'identifiant unique (ID_USR1) d'un compte d'un utilisateur de ce terminal (10), l'adresse (@IP1) de ladite passerelle dans le réseau étant appelée « première adresse de passerelle», ce procédé comportant:
- une étape (E10) de réception d'une requête d'accès (R1, R3), émise par un deuxième terminal (30) pour se connecter audit compte utilisateur, l'adresse source (@S) comprise dans ladite requête d'accès (R1, R3) étant susceptible d'être substituée par ladite passerelle (20) ;
- une étape (E20) d'obtention de ladite adresse source (@S) et dudit identifiant (ID_USR1) de compte, à partir de ladite requête d'accès (R1, R3) ;
- une étape (E30) de réception d'une requête d'association (R2) émise par ledit premier terminal (10) ;
- une étape (E40) d'obtention de ladite première adresse de passerelle (@IP1) et dudit identifiant (MAC_10) de premier terminal (10) à partir de ladite requête d'association (R2) ;
- une étape (E60, E70) d'obtention, d'une deuxième adresse (@IP2) de passerelle à partir de ladite adresse source (@S) ;
- une étape (E80) de comparaison desdites première (@IP1) et deuxième (@IP2) adresses de passerelle, et si ces adresses sont égales :
- une étape (E90) d'association de l'identifiant unique (MAC_10) du premier terminal (10) avec ledit identifiant unique de compte (ID_USR1) dans une base de données (51).

2. Procédé d'association selon la revendication 1, **caractérisé en ce que** :
- si ledit deuxième terminal (30) est connecté audit réseau via ladite passerelle (20), ladite deuxième adresse de passerelle (@IP2) est constituée par ladite adresse source (@S); et sinon
- ladite deuxième adresse de passerelle (@IP2) est obtenue (E70) dans une base de données (52) qui associe cette adresse avec ledit identifiant de compte (ID_USR1).

3. Procédé d'association selon la revendication 1 ou 2, **caractérisé en ce que**, pour obtenir (E70) ladite deuxième adresse de passerelle (@IP2), on effectue les sous-étapes suivantes :
- obtention d'un identifiant (ID2) d'une ligne de télécommunications associée audit identifiant unique de compte utilisateur (ID_USR1) ; et
- obtention de ladite deuxième adresse de passerelle (@IP2) associée audit identifiant de ligne (ID2).

4. Dispositif (40) pour associer l'identifiant unique (MAC_10) d'un premier terminal (10) connecté à un réseau de télécommunications (1) via une passerelle (20), à l'identifiant unique (ID_USR1) d'un compte d'un utilisateur de ce terminal (10), l'adresse (@IP1) de ladite passerelle dans le réseau étant appelée « première adresse de passerelle », ce dispositif (40) comportant:
- des moyens (44) de réception d'une requête d'accès (R1, R3), émise par un deuxième terminal (30) pour se connecter audit compte utilisateur, l'adresse source (@S) comprise dans ladite requête d'accès (R1, R3) étant susceptible d'être substituée par ladite passerelle (20) ;
- des moyens d'obtention de ladite adresse source (@S) et dudit identifiant (ID_USR1) de compte, à partir de ladite requête d'accès (R1, R3) ;
- des moyens (44) de réception d'une requête d'association (R2) émise par ledit premier terminal (10) ;
- des moyens d'obtention de ladite première adresse de passerelle (@IP1) et dudit identifiant (MAC_10) de premier terminal (10) à partir de ladite requête d'association (R2) ; et
- des moyens d'obtention d'une deuxième adresse de passerelle (@IP2) à partir de ladite adresse source (@S) ;
- des moyens de comparaison desdites première (@IP1) et deuxième (@IP2) adresses de passerelle (20) et ;
- des moyens pour associer, si ces adresses sont égales, l'identifiant unique (MAC_10) dudit premier terminal (10) avec ledit identifiant unique de compte (ID_USR1) dans une base de données (51).

5. Programme d'ordinateur comportant des instructions pour l'exécution des étapes du procédé d'association selon l'une quelconque des revendications 1 à 3 lorsque ledit programme est exécuté par un ordinateur.

6. Support d'enregistrement lisible par un ordinateur sur lequel est enregistré un programme d'ordinateur comprenant des instructions pour l'exécution des étapes du procédé d'association selon l'une quelconque des revendications 1 à 3.

7. Plateforme de service (60) comportant un dispositif d'association (40) selon la revendication 4 qui est apte à associer, dans une base de données (51), un identifiant unique (MAC_10) d'un terminal (10) avec un identifiant unique (ID_USR1) d'un compte d'un utilisateur dudit terminal sur ladite plateforme.

## Claims

1. Method for associating the unique identifier (MAC_10) of a first terminal (10) connected to a telecommunications network (1) via a gateway (20), with the unique identifier (ID_USR1) of an account of a user of this terminal (10), the address (@IP1) of said gateway in the network being called the first gateway address, this method comprising:
- a step (E10) of receiving an access request (R1, R3), sent by a second terminal (30) to connect to said user account, the source address (@S) included in said access request (R1, R3) being liable to be substituted by said gateway (20);
- a step (E20) of obtaining said source address (@S) and said account identifier (ID_USR1), on the basis of said access request (R1, R3);
- a step (E30) of receiving an association request (R2) sent by said first terminal (10);
- a step (E40) of obtaining said first gateway address (@IP1) and said identifier (MAC_10) of first terminal (10) on the basis of said association request (R2);
- a step (E60, E70) of obtaining a second gateway address (@IP2) on the basis of said source address (@S);
- a step (E80) of comparing said first (@IP1) and second (@IP2) gateway addresses, and if these addresses are equal:
- a step (E90) of associating the unique identifier (MAC_10) of the first terminal (10) with said unique account identifier (ID_USR1) in a database (51).

2. Associating method according to Claim 1, **characterized in that**:
- if said second terminal (30) is connected to said network via said gateway (20), said second gateway address (@IP2) consists of said source address (@S); and otherwise
- said second gateway address (@IP2) is obtained (E70) in a database (52) which associates this address with said account identifier (ID_USR1).

3. Associating method according to Claim 1 or 2, **characterized in that**, to obtain (E70) said second gateway address (@IP2), the following sub-steps are performed:
- obtaining an identifier (ID2) of a telecommunications line associated with said user account unique identifier (ID_USR1); and
- obtaining said second gateway address (@IP2) associated with said line identifier (ID2).

4. Device (40) for associating the unique identifier (MAC_10) of a first terminal (10) connected to a telecommunications network (1) via a gateway (20), with the unique identifier (ID_USR1) of an account of a user of this terminal (10), the address (@IP1) of said gateway in the network being called the first gateway address, this device (40) comprising:
- means (44) for receiving an access request (R1, R3), sent by a second terminal (30) to connect to said user account, the source address (@S) included in said access request (R1, R3) being liable to be substituted by said gateway (20);
- means for obtaining said source address (@S) and said account identifier (ID_USR1), on the basis of said access request (R1, R3);
- means (44) for receiving an association request (R2) sent by said first terminal (10);
- means for obtaining said first gateway address (@IP1) and said identifier (MAC_10) of first terminal (10) on the basis of said association request (R2); and
- means for obtaining a second gateway address (@IP2) on the basis of said source address (@S);
- means for comparing said first (@IP1) and second (@IP2) gateway addresses (20) and;
- means for associating, if these addresses are equal, the unique identifier (MAC_10) of said first terminal (10) with said unique account identifier (ID_USR1) in a database (51).

5. Computer program comprising instructions for the execution of the steps of the associating method according to any one of Claims 1 to 3 when said program is executed by a computer.

6. Recording medium readable by a computer on which is recorded a computer program comprising instructions for the execution of the steps of the associating method according to any one of Claims 1 to 3.

7. Service platform (60) comprising an associating device (40) according to Claim 4 which is able to associate, in a database (51), a unique identifier (MAC_10) of a terminal (10) with a unique identifier (ID_USR1) of an account of a user of said terminal on said platform.

## Patentansprüche

1. Verfahren zum Zuordnen der eindeutigen Kennung (MAC_10) eines ersten Endgeräts (10), das mit einem Telekommunikationsnetz (1) verbunden ist, über ein Gateway (20) zu einer eindeutigen Kennung (ID_USR1) eines Kontos eines Anwenders dieses Endgeräts (10), wobei die Adresse (@IP1) des Gateways in dem Netz "erste Gateway-Adresse" genannt wird, wobei dieses Verfahren Folgendes umfasst:
- einen Schritt (E10) des Empfangens einer Zugriffsanforderung (R1, R3), die von einem zweiten Endgerät (30) ausgegeben wird, um sich mit dem Anwenderkonto zu verbinden, wobei die Quelladresse (@S), die in dieser Zugriffsanforderung (R1, R3) enthalten ist, durch das Gateway (20) ersetzt werden kann;
- einen Schritt (E20) des Erhaltens der Quelladresse (@S) und der Kennung (ID_USR1) des Kontos anhand der Zugriffsanforderung (R1, R3);
- einen Schritt (E30) des Empfangens einer Zuordnungsanforderung (R2), die von dem ersten Endgerät (10) ausgegeben wird;
- einen Schritt (E40) des Erhaltens der ersten Gateway-Adresse (@IP1) und der Kennung (MAC 10) des Endgeräts (10) anhand der Zuordnungsanforderung (R2);
- einen Schritt (E60, E70) des Erhaltens einer zweiten Gateway-Adresse (@IP2) anhand der Quelladresse (@S) ;
- einen Schritt (E80) des Vergleichens der ersten Gateway-Adresse (@IP1) und der zweiten Gateway-Adresse (@IP2), und, falls diese gleich sind:
- einen Schritt (E90) des Zuordnens der eindeutigen Kennung (MAC_10) des ersten Endgeräts (10) zu der eindeutigen Kennung (ID_USR1) des Kontos in einer Datenbank (51).

2. Zuordnungsverfahren nach Anspruch 1, **dadurch gekennzeichnet, dass**:
- dann, wenn das zweite Endgerät (30) mit dem Netz über das Gateway (20) verbunden ist, die zweite Gateway-Adresse (@IP2) durch die Quelladresse (@S) gebildet wird; und andernfalls
- die zweite Gateway-Adresse (@IP2) aus einer Datenbank (52) erhalten wird (E70), die diese Adresse der Kennung (ID_USR1) des Kontos zuordnet.

3. Zuordnungsverfahren nach Anspruch 1 oder 2, **dadurch gekennzeichnet, dass**, um die zweite Gateway-Adresse (@IP2) zu erhalten (E70), die folgenden Unterschritte ausgeführt werden:
- Erhalten einer Kennung (ID2) einer Telekommunikationsleitung, die der eindeutigen Kennung des Anwenderkontos (ID_USR1) zugeordnet ist; und
- Erhalten der zweiten Gateway-Adresse (@IP2), die der Leitungskennung (ID2) zugeordnet ist.

4. Vorrichtung (40) zum Zuordnen der eindeutigen Kennung (MAC_10) eines ersten Endgeräts (10), das mit einem Telekommunikationsnetz (1) über ein Gateway (20) verbunden ist, zu der eindeutigen Kennung (ID_USR1) eines Kontos eines Anwenders dieses Endgeräts (10), wobei die Adresse (@IP1) dieses Gateways in dem Netz "erste Gateway-Adresse" genannt wird, wobei diese Vorrichtung (40) Folgendes umfasst:
- Mittel (44) zum Empfangen einer Zugriffsanforderung (R1, R3), die von einem zweiten Endgerät (30) ausgegeben wird, um sich mit dem Anwenderkonto zu verbinden, wobei die in dieser Zugriffsanforderung (R1, R3) enthaltene Quelladresse (@S) durch das Gateway (20) ersetzt werden kann;
- Mittel zum Erhalten der Quelladresse (@S) und der Kennung (ID_USR1) des Kontos anhand dieser Zugriffsanforderung (R1, R3);
- Mittel (44) zum Empfangen einer Zuordnungsanforderung (R2), die von dem ersten Endgerät (10) ausgegeben wird;
- Mittel zum Erhalten der ersten Gateway-Adresse (@IP1) und der Kennung (MAC_10) des ersten Endgeräts (10) anhand dieser Zuordnungsanforderung (R2); und
- Mittel zum Erhalten einer zweiten Gateway-Adresse (@IP2) anhand der Quelladresse (@S);
- Mittel zum Vergleichen der ersten Adresse (@IP1) und der zweiten Adresse (@IP2) der Gateway (20); und
- Mittel, um dann, wenn diese Adressen gleich sind, die eindeutige Kennung (MAC_10) des ersten Endgeräts (10) der eindeutigen Kennung (ID_USR1) des Kontos in einer Datenbank (51) zuzuordnen.

5. Computerprogramm, das Befehle enthält, um die Schritte des Zuordnungsverfahrens nach einem der Ansprüche 1 bis 3 auszuführen, wenn dieses Programm durch einen Computer ausgeführt wird.

6. Computerlesbarer Aufzeichnungsträger, in dem ein Computerprogramm aufgezeichnet ist, das Befehle für die Ausführung der Schritte des Zuordnungsverfahrens nach einem der Ansprüche 1 bis 3 enthält.

7. Dienstplattform (60), die eine Zuordnungsvorrichtung (40) nach Anspruch 4 enthält, die dazu ausgelegt ist, in einer Datenbank (51) eine eindeutige Kennung (MAC_10) eines Endgeräts (10) einer eindeutigen Kennung (ID_USR1) eines Kontos eines Anwenders des Endgeräts auf dieser Plattform zuzuordnen.
